Europäisches Patentamt

European Patent Office

Office européen des brevets

(11) Publication number: **0 457 181 A1**

# EUROPEAN PATENT APPLICATION

(21) Application number: **91107491.2**

(22) Date of filing: **08.05.91**

(51) Int. Cl.⁵: **A23L 3/06, A23L 3/00**

(30) Priority: **09.05.90 US 520940**

(43) Date of publication of application:
**21.11.91 Bulletin 91/47**

(84) Designated Contracting States:
**AT BE CH DE DK ES FR GB GR IT LI NL SE**

(71) Applicant: **FMC CORPORATION**
**200 East Randolph Drive**
**Chicago Illinois 60601(US)**

(72) Inventor: **Wijts, Corneel C.**
**19881 Scotland Drive**
**Saratoga, California 95070(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) Rotary sterilizers for plastic containers.

(57) A reel and spiral sterilizer is disclosed for processing products in non-cylindrical plastic containers (c) when the containers are encapsulated within cylindrical cartridges and carriers (24). The cartridges and carriers are fed into at least one reel and spiral sterilizer (12) and are subjected to heat treatment mediums which sterilize and thereafter cool the contents of the plastic containers prior to being released from said at least one reel and spiral sterilizer.

FIG_4

CROSS-REFERENCE OF RELATED APPLICATION

The present invention relates to Elizondo Application (identified by Assignee's Docket No. 70-10939 entitled Cartridge-Carriers For Plastic Containers In Continuous Rotary Or Orbital Sterilizers), which Application was filed on even date herewith and is presently assigned to the Assignee of the present invention.

BACKGROUND OF THE INVENTION

Field of the Invention

The present invention relates to sterilization method and apparatus and more specifically relates to cartridge-carriers for supporting plastic containers having food or other products to be sterilized therein when within continuous rotary or orbital sterilizing and cooling systems.

Description of the Prior Art

Agitating and non-agitating reel and spiral sterilizing systems which receive cylindrical containers positioned within cartridges and carriers for preventing damage to glass containers or the like when moving through reel and spiral sterilizers system are well known in the art. Assignee's Bell Patent No. 3,314,560 discloses a method and apparatus for unloading articles such as glass jars from encapsulation within a two piece telescoping capsule which has passed through a reel and spiral sterilizing system. Assignee's Croall et al Patent 3,388,528 is similar to the Bell patent but differs in that it discloses an apparatus for encapsulating and loading cylindrical glass containers within cartridges which together form capsules.

Assignee's Peck Patent 3,511,168 discloses conventional reel and spiral processing systems which may be agitating or non-agitating system that progressively move encapsulated containers, such as glass jars, through the processing system.

Orbital sterilizers are known in the art and include a housing having a reel and spiral therein but differ from conventional reel and spiral sterilizers in that the spiral is stationary when it is desired to receive containers, advance the containers longitudinally of the axis of the reel, and thereafter discharge the containers from the housing. However, after first filling the housing with a batch of containers, the spiral is disconnected from the housing and is attached to the reel thereby allowing the container to be rotated for agitating the product therein while being cooked, sterilized and thereafter cooled.

Plastic containers in many shapes and sizes such as bowls, trays and cups have become popular in recent years for containing food, or other types of products, and are sealed within plastic, foil, or metal lids. Heretofore these plastic containers were sterilized in batch sterilizers by placing the containers in large cars which are processed in bulk type sterilization systems that may result in non-uniform heat treatment.

Some food products in the plastic containers require gentle agitation to mix the various components and/or to improve heat transfer. Conventional cookers such as universal or hydrostatic sterilizers do not meet these gentle heat transfer and mixing requirements resulting in uneven agitation of the product between the center and outside of the containers.

SUMMARY OF THE INVENTION

The rotary sterilizers and cartridge-carriers of the present invention are intended for use in agitating and non-agitating reel and spiral sterilization systems, or in orbital sterilization systems, each of which receives a cartridge-carrier having one or more sealed plastic containers therein filled with a product to be sterilized. The first embodiment of the invention illustrates a cartridge having at least one filled and sealed container in the form of a generally frusto-conical or elongated bowl therein. A second embodiment discloses at least one filled and sealed tray in a second cartridge; and a third embodiment of the cartridge illustrates a plurality of levels of product filled and sealed cups in a third cartridge and encompassing carrier.

BRIEF DESCRIPTION OF THE DRAWINGS

Figure 1 is a perspective with parts broken away of a conventional prior art reel and spiral sterilization unit.

Figure 2 is a fragment of the lower portion of a non-agitating reel and spiral sterilizing apparatus.

Figure 3 is a fragment of the lower portion of a conventional agitating reel and spiral sterilizing apparatus.

Figure 4 is a perspective with parts broken away of a modified reel and spiral sterilizing apparatus with spirals spaced a sufficient distance apart for processing a plurality of plastic containers within the long cartridge-carriers.

Figure 5 is an end elevation of one of the cartridges illustrating a product filled and sealed bowl therein.

Figure 6 is an end elevation of a second embodiment of the cartridge having parallel spacers therein for encapsulating a plurality of filled and sealed trays therein.

Figure 7 is an end elevation of a third embodiment of a cartridge having parallel spacers therein for encapsulating a plurality of product filled and sealed cups therein.

Figure 8 is a longitudinal section with parts broken away illustrating an elongated cartridge within a carrier having a plurality of product filled trays therein.

Prior to describing the present invention it is believed that it would be helpful in understanding the invention by describing the problems to be solved.

Since the modern food canning industry was established, metal cans and jars have been the standard containers for thermal processing, shelf stable food products. However, as interest in microwavable containers among food consumers grows, food processors are increasingly more interested in processing self-stable food products in different types of retortable plastic containers such as lunch buckets, bowls, trays, cups and other types of plastic containers with plastic and/or foil type lids.

Food processors have a wide choice of retort systems which provide batch or continuous processing, with or without agitation of the containers. The selection of a retort system for processing plastic containers is far more complex than that of rigid metal containers. Due to the "irregular" and non-cylindrical nature of most plastic containers, these containers are normally loaded in batches and cars that transfer and move them through the sterilizing system continuously or in batches. Most of the batch retorts available on the market have a capability of rotating the cars while inside the retort to provide end-over-end agitation. This type of agitation results in uneven agitation and heat transfer between the center and outside containers within the car.

For more even agitation and continuous operation, the prior art rotary continuous sterilizers offer the advantage of uninterrupted flows of containers through the retort as well as uniform agitation. As the containers move through the sterilizer, each container is agitated uniformly during the cook and cool cycle. However, this type of sterilization is designed to handle cylindrical containers and, therefore, the container types that can be processed are limited.

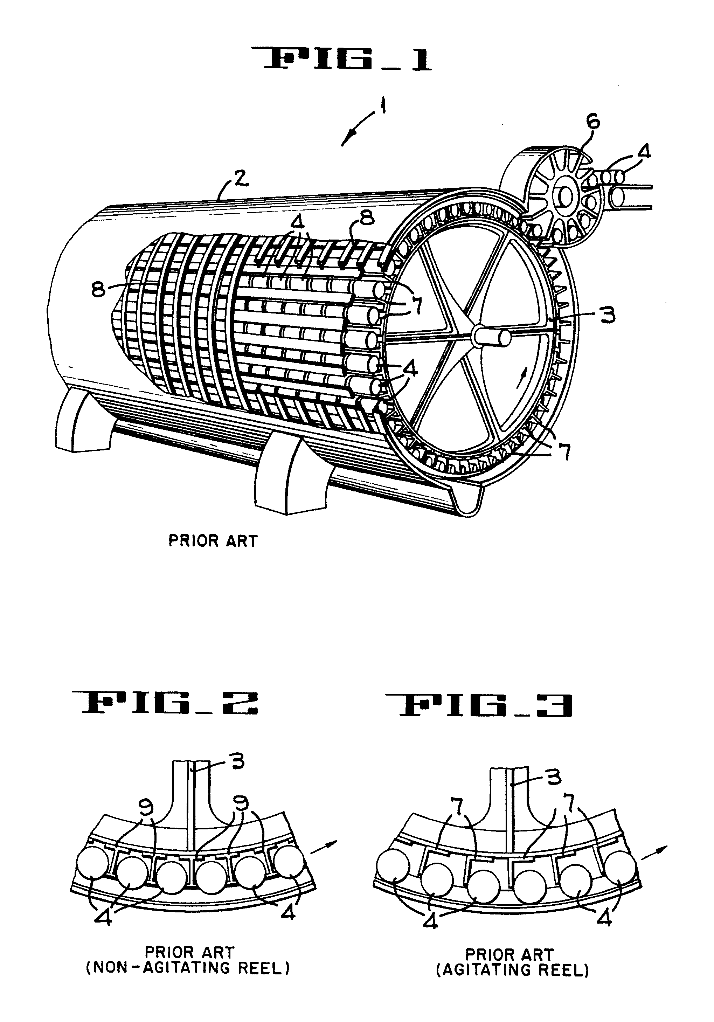

A prior art continuous rotary heat treatment apparatus such as a sterilizer 1 is illustrated in Figure 1 and includes a cylindrical housing 2 having a rotatable reel 3 therein which is journaled in end plates (not shown) that are secured to the housing 2 in pressure tight engagement. Cylindrical glass containers are encapsulated within cartridge-carriers 4 and are fed into the rotary sterilizer by a rotary pressure feed valve 6. The cartridge-carriers are received by angle bars (Figs. 1 and 3) when it is desired to agitate the contents of the containers by causing the containers to roll when moving within the bottom portion of the housing 2. The angle bars 7 extend parallel to the axis of rotation of the reel 3 causing the cartridge-carriers 4 and containers therein to contact a T-shaped spiral 8 connected to the housing 2 and move longitudinally of the sterilizer 1 to and through a rotary pressure discharge valve (not shown) at the rear of the sterilizer 1.

If agitation of the containers is not desired, T-shaped bars 9 (Fig. 2) are substituted for the angle bars 7 thereby preventing the containers from rolling when in the lower portion of the sterilizer 1.

Although only a portion of one reel and spiral sterilizer 1 has been illustrated in Figure 1, it will be understood that in practice, prior art reel and spiral sterilization systems usually include at least one reel and spiral preheater, at least one reel and spiral sterilizer, and at least one reel and spiral cooler all interconnected so that the containers are gradually raised to the desired sterilizing temperature and thereafter are gradually cooled thereby controlling the internal pressure within the container during processing thus preventing excessive expansion and breakage of the container seal.

DESCRIPTION OF THE PREFERRED EMBODIMENT

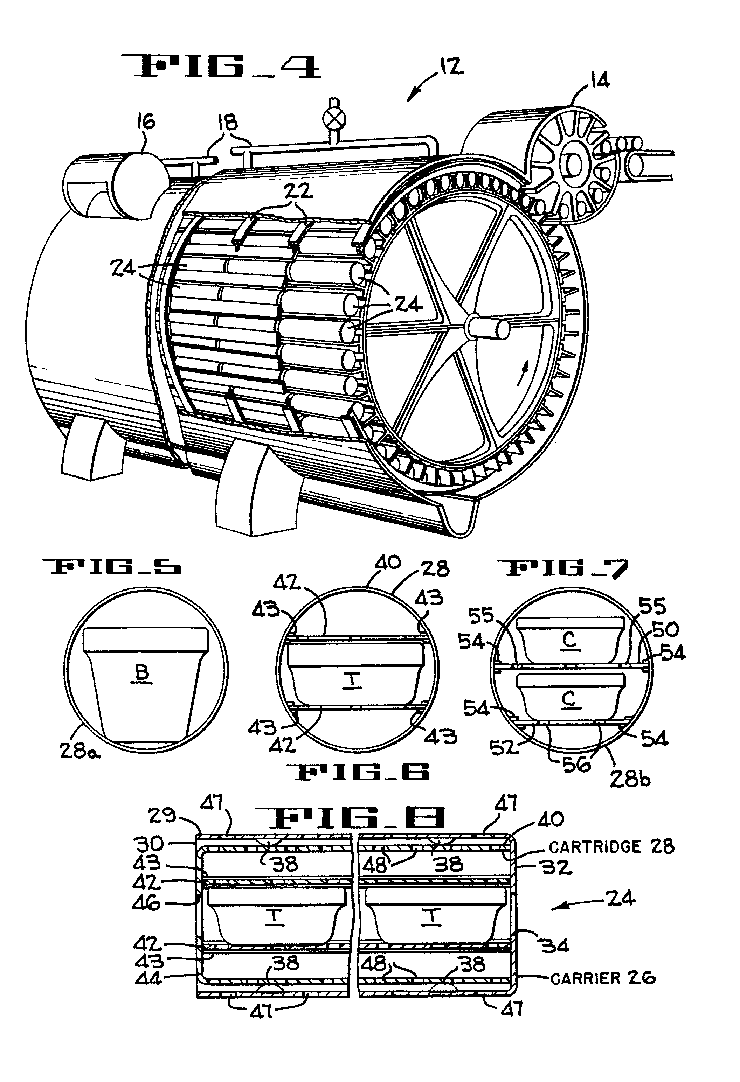

A reel and spiral sterilizer 12, (Fig. 4) having a feed valve 14, a discharge valve 16, and piping 18 for directing a heat treatment medium into the sterilizer. The sterilizer 12 is illustrated in Figure 4 and may be the same as that disclosed in prior art Figure 1, or may include a spiral 22 having a larger pitch than that illustrated in the prior art Figure 1 thus enabling a larger number of plastic containers such as product filled bowls B (Fig. 5), trays T (Fig. 6), and cups C (Fig. 7) to be encapsulated within cartridges-carriers 24 (Fig. 8). Although the bowls B, tubs T and cups C are illustrated as symmetrical about a vertical axis (Figs. 5-7), it will be understood that each of these containers may be in the form of elongated containers (not shown) so that a plurality of containers will fit within the elongated cartridge-carriers 24.

Each cartridge-carrier 24 includes an outer cylindrical carrier 26 and an inner cartridge 28. The carrier includes a cylindrical wall 29, an open end 30 and a partially closed end 32 having a hole 34 therein for enabling a heat treatment medium to flow into and through the carrier 26, and out the open end 30 thereof thereby heat treating the product within the cartridge-carrier 24. A plurality of dimples 38 are provided in the outer cylindrical wall 29 of the carrier for slidably receiving an associated cartridge 28.

One embodiment of the cartridge 28 includes a cylindrical wall 40 (Figs. 6 and 8) having a pair of container supporting spacers 42 therein which may be either rigidly secured or slidably received within an inner surface of the cylindrical wall 40 for confining a plurality of containers T therein. Generally U-shaped guides 43 secured to the inner surface of the cartridge 28 are provided for supporting the spacers 42 when used. One end of the cartridge 28 is open while the other end of the cartridge is partially closed by wall 44 having a hole 46 therein for allowing the heat treatment medium to readily circulate past the containers for enhancing heat transfer through the cartridge-carrier 24 and into the contents of the containers to sterilize the same. The cylindrical walls of the carriers 26 and the cartridge 28 are provided with a plurality of holes 47 and 48 respectively, for aiding in heat transfer.

Figure 5 illustrates a cartridge 28a adapted to receive a plurality of product filled and sealed plastic bowls B which cartridge 28a is similar to the Figure 6 cartridge 28 except that the bowls B fit within the cylindrical cartridge without requiring other container supporting spacers. Although the bowl B is illustrated as having a generally frusto-conical shape, it will be understood that the bowls may have an elongated body in the direction of the axis of the cartridge with half frusto-conical end portions.

Figure 7 illustrates a cartridge 28b which supports two layers of cups C on container supporting plates 50,52. The supporting plates 50,52 may be rigidly secured within the cartridge 28b or may be removably fitted therein for selectively handling bowls B or cups C. Guides 54 may be used to support the plates 50,52 when cups C are to be sterilized. It will also be understood that the cup C may have elongated rather than generally circular shapes as in the other embodiments of the invention.

It will be understood that the container supporting plates 50,52 are preferably provided with holes 55,56 to enhance heat transfer between the containers and the heating medium, and thereafter, a cooling mediums such as water as is conventional in the art.

From the foregoing description it is apparent that the method and apparatus of the present invention discloses several embodiments of cartridges and carriers which are adapted to carry different types of product filled and sealed plastic containers through a conventional reel and spiral cooking and cooling system, or through a modified reel and spiral cooking and cooling system with the spirals having a larger pitch to accommodate longer cartridges and carriers. Two embodiments of the cartridges are capable of handling either one level of containers or a plurality of levels of containers.

Although the best mode contemplated for carrying out the present invention has been herein shown and described, it will be apparent that modification and variation may be made without departing from what is regarded to be the subject matter of the invention.

## Claims

1. A reel and spiral heat treatment apparatus for processing product filled and sealed plastic containers when within a plurality of cylindrical telescoping cartridges and carriers comprising:
   means for advancing the telescoping cartridges and carriers having the plastic containers therein throughout at least the one reel and spiral heat treatment apparatus;
   means for directing a heat treatment medium against said encapsulated plastic containers while advancing through said reel and spiral heat treatment apparatus, and
   means for discharging said cartridges and carriers and plastic containers therein from said reel and spiral heat treatment apparatus.

2. An apparatus according to claim 1 wherein a plurality of product filled and sealed plastic containers are slidably received and confined in each of said cylindrical telescoping cartridges.

3. An apparatus according to claim 1 and additionally comprising a plurality of spaced parallel container confining spacers received within each of said cylindrical cartridges for supporting and confining said plurality of product filled plastic containers therebetween.

4. An apparatus according to claim 3 wherein said plurality of spaced parallel container confining spacers are perforated for enhancing heat transfer between said heat treatment medium and said product filled plastic containers.

5. An apparatus according to claim 1 and additionally comprising a plurality of spaced parallel container supporting spacers received within each of said cylindrical cartridges for supporting a plurality of layers of product filled plastic containers thereon.

6. An apparatus according to claim 5 wherein said plurality of spaced parallel container supporting spacers are perforated for enhancing heat treatment between said heat treatment medium and said product filled plastic containers.

7. An apparatus according to claim 1 wherein said spiral runs are widely spaced for accommodating cartridges and carriers which are longer than conventional spaced spiral runs in conventional reel and spiral cookers for accommodating more containers in said larger cartridges and carriers.

8. In a high pressure rotary sterilizer having a rotary pressure feed valve and a rotary pressure discharge valve operatively connected to a pressure chamber for directing produce filled plastic containers into and out of a cylindrical housing having a rotatable reel and a spiral for moving said plurality of product filled plastic containers from said pressure feed valve to and through said pressure discharge valve while the containers are subjected to a heat treatment medium, the improvement which comprises:

a plurality of cylindrical cartridge means for receiving at least one sealed plastic container therein and having a first end open and a second end partially closed: and

a plurality of cylindrical carrier means each having one end open and the other end partially closed for slidably receiving associated ones of said cartridges with said at least one product filled plastic container therein, said plurality of cartridge means and carrier means being advanced through said pressure chamber for heat treating said product filled plastic containers while said reel is rotating for gently agitating the product in said plastic containers.

9. An apparatus according to claim 8 wherein a plurality of product filled and sealed plastic containers are slidably received and confined within each of said cylindrical cartridges.

10. An apparatus according to claim 8 and additionally comprising a plurality of spaced parallel container confining spacers received within each of said cylindrical cartridges for supporting and confining said plurality of product filled plastic containers therebetween.

11. A method of processing product filled and sealed plastic containers, comprising the steps of:

encapsulating the plastic containers within a plurality of telescoping cartridges and carriers;

advancing the telescoped cartridges and containers having the plastic containers therein through at least one reel and spiral heat treatment apparatus;

directing a heat treatment medium against said encapsulated plastic containers while advancing through said reel and spiral heat treatment apparatus, and

discharging the cartridges, carriers and plastic containers therein out of said reel and spiral heat treatment apparatus.

12. A method according to claim 11 and additionally comprising the step of confining and supporting the plastic containers within said cartridges and carriers for preventing damage to said plastic containers.

13. A method according to claim 11 and additionally comprising the step of confining and supporting said containers between a pair of container supporting spacers in said cartridges which cooperate with peripheral surfaces of said cartridges for confining the plastic containers therein.

# FIG_1

PRIOR ART

# FIG_2

PRIOR ART
(NON-AGITATING REEL)

# FIG_3

PRIOR ART
(AGITATING REEL)

FIG_4

FIG_5  FIG_6  FIG_7  FIG_8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 302 306 (F.M.C. CORP.)<br>* The whole document * | 1 | A 23 L 3/06<br>A 23 L 3/00 |
| Y | GB-A-1 142 970 (P. CARVALLO)<br>* Figure 10; page 3, line 119 - page 4, line 2; claim 1 * | 1 | |
| A | EP-A-0 083 385 (R. GOMEZ) | | |
| A,D | US-A-3 511 168 (F.M.C. CORP.) | | |
| Y,D | US-A-3 536 225 (F.M.C. CORP.)<br>* The whole document * | 1 | |
| Y | JOURNAL OF FOOD SCIENCE, vol. 47, no. 1, January-February 1981, pages 303-305, Chicago, Illinois, US; R.A. ROOP et al.: "Processing retort pouches in conventional sterilizers"<br>* The whole document * | 1 | |
| A | FR-A-2 443 840 (TOYO SEIKAN KAISHA) | | |
| A | GB-A-1 509 046 (TOYO SEIKAN KAISHA) | | TECHNICAL FIELDS SEARCHED (Int. Cl.5)<br><br>A 23 L |
| A | US-A-1 944 857 (H.V. ATWELL) | | |

The present search report has been drawn up for all claims

| Place of search | Date of completion of search | Examiner |
|---|---|---|
| The Hague | 26 August 91 | GUYON R.H. |